# EUROPÄISCHE PATENTSCHRIFT

(11) **EP 4 064 056 B1**
(45) Veröffentlichungstag und Bekanntmachung des Hinweises auf die Patenterteilung: **27.12.2023**
(21) Anmeldenummer: 21165241.7
(22) Anmeldetag: 26.03.2021
(51) Int. Cl.: G06F 11/14, B60W 30/10, B60W 30/165, B60W 50/023, B60W 60/00, B60W 50/06

(54) **VERFAHREN ZUM ZUMINDEST TEILWEISE AUTOMATISIERTEN FÜHREN EINES KRAFTFAHRZEUGS**
METHOD FOR AT LEAST PARTLY AUTOMATED DRIVING OF A MOTOR VEHICLE
PROCÉDÉ POUR CONDUITE AU MOINS PARTIELLEMENT AUTOMATISÉE D'UN VÉHICULE AUTOMOBILE

(43) Veröffentlichungstag der Anmeldung: 28.09.2022
(73) Patentinhaber: Volkswagen Aktiengesellschaft, 38440 Wolfsburg (DE)
(72) Erfinder: Martinez Flores, Yael Abelardo, 45128 Guadalajara (MX); Kain, Tobias, 3281 Oberndorf/Melk (AT); Aguirre Mehlhorn, Marcel, 38448 Wolfsburg (DE); Decke, Hendrik, 38104 Braunschweig (DE); Müller, Julian-Steffen, 30161 Hannover (DE)

(56) Entgegenhaltungen:
- WO-A1-2020/177980
- DE-A1-102012 002 280
- DE-A1-102018 207 533

## Beschreibung

Die Erfindung betrifft ein Verfahren zum teilweise automatisierten Führen eines Kraftfahrzeugs. Die Erfindung betrifft weiterhin ein Rechnerprogrammprodukt umfassend ein Programm für eine Rechnereinheit einer Fahrzeugsteuereinrichtung eines Kraftfahrzeugs. Ferner betrifft die Erfindung eine Fahrzeugsteuereinrichtung zum zumindest teilweise automatisierten Führen eines Kraftfahrzeugs. Schließlich betrifft die Erfindung auch ein Kraftfahrzeug mit einer Fahrzeugsteuerung zum zumindest teilweise automatisierten Führen des Kraftfahrzeugs.

Automatisiert geführte Kraftfahrzeuge, wie aus der WO 2020/177980 A1 bekannt, bzw. zumindest teilweise automatisiert geführte Kraftfahrzeuge, nutzen eine Mehrzahl von Rechnerprogrammanwendungen beziehungsweise Anwendungen, um Umgebungsinformationen zu analysieren. Die Umgebungsinformationen können in Form von Umgebungsdaten vorliegen, die mittels eines oder mehrerer Umgebungssensoren erfasst worden sind. Diese Anwendungen müssen zuverlässig und robust genug sein, um unter weitgehend beliebigen Umständen effektiv betrieben werden zu können. Rechnerprogrammanwendungen wie die, die in zumindest teilweise autonomen Kraftfahrzeugen ausgeführt werden, analysieren eine Vielzahl von Daten, um den besten Aktivitätskurs zu ermitteln. Darüber hinaus führen zumindest teilweise autonome Kraftfahrzeuge eine Mehrzahl von redundanten Rechnerinstanzen von wichtigen Anwendungen aus, um insgesamt ein robustes System erreichen zu können. Derartige Anwendungen sowie hierzu redundante Anwendungen benötigen jedoch eine signifikante Menge an Ressourcen, insbesondere in Bezug auf einen Verbrauch an Energie durch die jeweils ausgeführte Instanz und in Bezug auf Ressourcen von einer oder mehreren Rechnereinheiten.

Die Erfindung befasst sich mit der Aufgabe, wenigstens den Verbrauch von Energie oder den Verbrauch von Ressourcen einer Rechnereinheit zu verbessern, insbesondere zu reduzieren.

Als Lösung wird mit der Erfindung ein Verfahren, ein Rechnerprogrammprodukt, eine Fahrzeugsteuereinrichtung sowie ein Kraftfahrzeug gemäß den unabhängigen Ansprüchen vorgeschlagen.

Vorteilhafte Weiterbildungen ergeben sich aus Merkmalen der abhängigen Ansprüche.

In Bezug auf ein gattungsgemäßes Verfahren wird mit der Erfindung vorgeschlagen, dass eine erste Anwendung und wenigstens eine redundante zweite Anwendung jeweils Ausgangsdaten abhängig von Kraftfahrzeugbetriebsdaten und/oder Umfelddaten bereitstellen, Fahrzeugführungsdaten zum zumindest teilweise automatisierten Führen des Kraftfahrzeugs abhängig von den Ausgangsdaten ermittelt werden, Fahrzeugbetriebsdaten eines Fremdfahrzeugs empfangen werden, und abhängig von den Fahrzeugbetriebsdaten des Fremdfahrzeugs die wenigstens eine redundante zweite Anwendung von einem Aktivzustand, in dem das Ermitteln der Fahrzeugführungsdaten unter Berücksichtigung der Ausgangsdaten der wenigstens einen redundanten zweiten Anwendung erfolgt, in einen Bereitschaftszustand wechselt, in dem eine von der wenigstens einen redundanten zweiten Anwendung genutzte Rechnerinstanz einer Rechnereinheit zumindest mit geringerer Häufigkeit als im Aktivzustand ausgeführt wird.

In Bezug auf eine gattungsgemäße Steuereinrichtung wird mit der Erfindung vorgeschlagen, dass die Fahrzeugsteuereinrichtung eine programmgesteuerte Rechnereinheit aufweist, die ausgebildet ist, mittels einer ersten Anwendung und wenigstens einer redundanten zweiten Anwendung jeweils Ausgangsdaten abhängig von Kraftfahrzeugbetriebsdaten und/oder Umfelddaten bereitzustellen, Fahrzeugführungsdaten zum zumindest teilweise automatisierten Führen des Kraftfahrzeugs abhängig von den Ausgangsdaten zu ermitteln, Fahrzeugbetriebsdaten eines Fremdfahrzeugs zu empfangen, und abhängig von den Fahrzeugbetriebsdaten des Fremdfahrzeugs die wenigstens eine redundante zweite Anwendung von einem Aktivzustand, in dem das Ermitteln der Fahrzeugführungsdaten unter Berücksichtigung der Ausgangsdaten der wenigstens einen redundanten zweiten Anwendung erfolgt, in einen Bereitschaftszustand zu wechseln, in dem eine von der wenigstens einen redundanten zweiten Anwendung genutzte Rechnerinstanz der Rechnereinheit zumindest mit geringerer Häufigkeit als im Aktivzustand ausgeführt wird.

In Bezug auf ein gattungsgemäßes Kraftfahrzeug wird vorgeschlagen, dass die Fahrzeugsteuereinrichtung gemäß der Erfindung ausgebildet ist.

In Bezug auf ein Rechnerprogrammprodukt wird mit der Erfindung vorgeschlagen, dass das Rechnerprogrammprodukt ein Programm für eine Rechnereinheit einer Fahrzeugsteuereinrichtung eines Kraftfahrzeugs umfasst, wobei das Programm Programmcodeabschnitte zum Ausführen des Verfahrens gemäß der Erfindung aufweist, wenn das Programm durch die Rechnereinheit ausgeführt wird.

Die Erfindung basiert unter anderem auf dem Gedanken, eine dynamische Rekonfiguration einer Fahrzeugsteuereinrichtung basierend auf Informationen beziehungsweise Daten, erhalten von Fremdfahrzeugen, durchführen zu können. Die Fahrzeugsteuereinrichtung, insbesondere deren Rechnereinheit, analysiert einen aktuellen Kontext und bestimmt Anforderungen in Bezug auf einen Sicherheitspegel. Dadurch, dass beides genutzt werden kann, nämlich fahrzeugseitig selbst ermittelte Daten sowie Fahrzeugbetriebsdaten des Fremdfahrzeugs, kann die Fahrzeugsteuereinrichtung bestimmen, welche Systemkonfiguration, insbesondere in Bezug auf die wenigstens eine Rechnereinheit der Fahrzeugsteuereinrichtung, angepasst wird, wobei das Ziel ist, eine möglichst effiziente Konfiguration erreichen zu können. Dies umfasst unter anderem den Verbrauch von Energie sowie auch die Nutzung von Rechnerressourcen. Zugleich sollen die bestimmten Sicherheitsanforderungen beibehalten werden können. Dabei nutzt die Erfindung den weiteren Gedanken, solche Anwendungen zu identifizieren, die von einem Aktivzustand in einen Bereitschaftszustand wechseln können, beispielsweise weil der Pegel in Bezug auf Redundanz für diese Anwendung reduziert werden kann, oder die Häufigkeit der Ausführung dieser Anwendungen sowie insbesondere auch von damit verbundenen Rechnerinstanzen reduziert werden kann. Das Ausführen von weniger oder weniger ressourcenintensiven Anwendungen kann zum Reduzieren von Ressourcen, wie zuvor genannt, führen.

Insbesondere für den Betrieb von zumindest teilweise automatisierten Fahrzeugen beziehungsweise zumindest teilweise autonomen Fahrzeugen sind eine Mehrzahl von Rechnerprogrammanwendungen erforderlich, zum Beispiel Wahrnehmung beziehungsweise Erfassen der Umgebung, Planung, insbesondere in Bezug auf das Ermitteln von Trajektorien, Fahrzeugkontrolldienste und/oder dergleichen. Im Allgemeinen ist eine Anwendung beziehungsweise eine Rechnerprogrammanwendung eine Funktion, die Eingangsdaten, beispielsweise Sensordaten, Daten von anderen Anwendungen oder dergleichen, in Ausgangsdaten umwandelt, beispielsweise Instruktionsdaten, Befehle, Analyse der Eingangsdaten und/oder dergleichen. Da viele solcher Rechnerprogrammanwendungen sicherheitskritisch sind, werden sie in redundanter Weise ausgeführt, das heißt, die Fahrzeugsteuereinrichtung führt mehrere Anwendungen aus, die die gleiche Funktionalität realisieren, zum Beispiel Ermitteln einer Trajektorie oder dergleichen. Die redundanten Anwendungen können entweder homogen sein, zum Beispiel indem eine spezifische Anwendung mehrmals zu einem Zeitpunkt ausgeführt wird, oder auch heterogen sein, indem mehrere unterschiedliche Anwendungen die gleiche Funktionalität bereitstellen.

Die Erfindung nutzt ferner den Gedanken, dass das zumindest teilweise automatisiert geführte Kraftfahrzeug mit anderen Kraftfahrzeugen beziehungsweise Fremdfahrzeugen kommunizieren kann und Daten auf eine sichere, zuverlässige und schnelle Weise übermittelt werden können. Die erhaltenen Daten der Fremdfahrzeuge erlauben das Implementieren der Erfindung, indem die empfangenen Daten genutzt werden, zu bestimmen, ob eine Anwendung in einen Bereitschaftsmodus wechseln kann, zum Beispiel indem die Anzahl der ausgeführten Operationen reduziert werden kann, oder die Anwendung deaktiviert werden kann. Die Fahrzeugbetriebsdaten des Fremdfahrzeugs können zum Beispiel Daten von einem Lidar, einem Radar, einer Kamera, einem Tachometer, einem Temperatursensor, einem Bremssensor, einer Analyse von Sensordaten, Ausgangsdaten von Rechnerprogrammanwendungen, Daten eines GPS-Sensors und/oder dergleichen umfassen.

Mit der Erfindung kann erreicht werden, dass der Wirkungsgrad erhöht und die Ressourcenzuordnung für Rechnerprogrammanwendungen optimiert werden können, vorzugsweise wenn bestimmte Bedingungen eingehalten werden. Zum Beispiel kann eine solche Bedingung sein, dass eine zuverlässige Kommunikation und ein zuverlässiger Datentransfer zwischen den Kraftfahrzeugen vorliegt. Sobald eine zuverlässige Kommunikation hergestellt ist, können die Kraftfahrzeuge untereinander Daten übermitteln, die von dem jeweils anderen Kraftfahrzeug genutzt werden können. Die empfangenen Daten können dazu genutzt werden, zu bestimmen, ob Rechnerprogrammanwendungen in den Bereitschaftszustand wechseln oder sogar deaktiviert werden können. Vorzugsweise ist dieser Wechsel von den Informationen, die übermittelt worden sind beziehungsweise empfangen worden sind, und von Kontextbedingungen abhängig, beispielsweise einem aktuellen Fahrzustand wie Fahrbahneigenschaften, Wetter, Verkehrssituation, der Zuverlässigkeit der Kommunikationsverbindung, einer Priorität der jeweiligen Rechnerprogrammanwendung und/oder dergleichen. Darüber hinaus kann der Wechsel auch von einem aktuellen Sicherheitspegel abhängig sein. Dabei kann vorgesehen sein, dass ein Wechsel in den Bereitschaftszustand nicht erlaubt wird, wenn dadurch der erreichte Sicherheitspegel unter einen vorgegebenen Sicherheitspegel fällt.

Die erste Anwendung beziehungsweise Rechnerprogrammanwendung ist eine Anwendung, für die vorzugsweise ein kontinuierlicher bestimmungsgemäßer Betrieb vorgesehen ist. Die redundante zweite Anwendung ist dagegen eine Anwendung, die auf redundante Weise die gleiche Funktionalität bereitstellt und die zwischen dem Aktivzustand und dem Bereitschaftszustand wechseln kann. Findet keine Kommunikation zwischen dem Kraftfahrzeug und irgendeinem Fremdfahrzeug statt, ist die redundante zweite Anwendung in der Regel im Aktivzustand. In diesem Fall brauchen keine Fahrzeugbetriebsdaten eines Fremdfahrzeugs vorzuliegen. Werden dagegen Fahrzeugbetriebsdaten eines Fremdfahrzeugs empfangen, besteht die Möglichkeit, dass die redundante zweite Anwendung vom Aktivzustand in den Bereitschaftszustand wechseln kann, sodass die durch die redundante zweite Anwendung genutzte Rechnerinstanz der Rechnereinheit zumindest mit geringerer Häufigkeit als im Aktivzustand ausgeführt wird (englisch: degraded mode). Die von der redundanten zweiten Anwendung genutzte Rechnerinstanz kann zum Beispiel ein Maschinencode sein, der unmittelbar durch die Rechnereinheit ausgeführt wird.

Im Aktivzustand stellt die redundante zweite Anwendung im Wesentlichen die gleiche Funktionalität wie die erste Anwendung bereit, sodass eine Redundanz erreicht werden kann. Im Bereitschaftszustand kann die Funktionalität eingeschränkt sein, oder sogar vollständig entfallen (englisch: active-low mode). Hierdurch kann nicht nur Energie eingespart werden, sondern dadurch, dass die Rechnerinstanz nicht mehr so häufig oder sogar gar nicht mehr benötigt wird, kann eine entsprechende Ressource der Rechnereinheit freigegeben werden, sodass andere Funktionen schneller und/oder besser ausgeführt werden können.

Die Fahrzeugsteuereinheit weist vorzugsweise wenigstens eine Rechnereinheit auf, die es erlaubt, auf Basis eines Rechnerprogramms eine Funktionalität bereitzustellen.

Gemäß einer Weiterbildung wird vorgeschlagen, dass die Fahrzeugführungsdaten vor dem Wechseln der wenigstens einen redundanten zweiten Anwendung vom Aktivzustand in den Bereitschaftszustand für einen vorgegebenen Zeitraum unabhängig von den Ausgangsdaten der wenigstens einen redundanten zweiten Anwendung ermittelt werden. In diesem Zustand liefert also die redundante zweite Anwendung weiterhin die volle Funktionalität, jedoch werden die entsprechenden Ausgangsdaten der redundanten zweiten Anwendung nicht weiter berücksichtigt (englisch: active-high mode). Dies erlaubt es, die Fahrzeugführungsdaten unter Nutzung der Fahrzeugbetriebsdaten des Fremdfahrzeugs zu ermitteln, wobei die Fahrzeugbetriebsdaten die redundante zweite Anwendung zumindest teilweise ersetzen können. Zugleich kann während dieses vorgegebenen Zeitraums sichergestellt werden, dass die zuverlässige Funktion zum Ermitteln der Fahrzeugführungsdaten weiterhin auch in Bezug auf die Redundanz gegeben ist. Sollte während des vorgegebenen Zeitraums eine Störung auftreten, kann unverzüglich auf die Nutzung der Ausgangsdaten der redundanten zweiten Anwendung umgeschaltet werden oder es können diese zusätzlich berücksichtigt werden, sodass das erforderliche Sicherheitsniveau beziehungsweise der gewünschte Sicherheitspegel weiterhin sichergestellt werden kann. Als besonders vorteilhaft erweist sich diese Ausgestaltung dann, wenn die Zuverlässigkeit der Kommunikation zwischen dem Kraftfahrzeug und dem Fremdfahrzeug sich verändert, insbesondere verschlechtert, oder nach dem Herstellen der Kommunikationsverbindung noch nicht die notwendige Zuverlässigkeit erreicht hat.

Weiterhin wird vorgeschlagen, dass das Wechseln der wenigstens einen redundanten zweiten Anwendung vom Aktivzustand in den Bereitschaftszustand abhängig von einem Vergleich der Ausgangsdaten der wenigstens einen redundanten zweiten Anwendung mit den Fahrzeugbetriebsdaten des Fremdfahrzeugs erfolgt. Zu diesem Zweck können spezifische Daten der Fahrzeugbetriebsdaten des Fremdfahrzeugs ausgewählt werden, die dann mit den Ausgangsdaten der redundanten zweiten Anwendung verglichen werden können. Erst wenn durch den Vergleich ein hinreichendes Maß an Übereinstimmung erreicht worden ist, kann der Wechsel freigegeben werden oder ausgelöst werden. Darüber hinaus kann natürlich vorgesehen sein, dass das Vergleichen über einen vorgegebenen Zeitraum erfolgt und in diesem Zeitraum eine hinreichende Übereinstimmung im Wesentlichen kontinuierlich gegeben sein soll. Dadurch kann eine weitere Verbesserung der Verfahrensführung erreicht werden.

Es wird ferner vorgeschlagen, dass der Bereitschaftszustand einen Passivzustand ohne Nutzung der Rechnerinstanz nutzt. Dies hat den Vorteil, dass die Rechnerinstanz freigegeben werden kann für die Nutzung durch andere Anwendungen oder sogar vollständig deaktiviert werden kann (englisch: active-low mode). Dadurch können Rechnerressourcen in Bezug auf die Rechnereinheit freigegeben werden. Schließlich kann dadurch auch die Rechnereinheit effizienter betrieben werden, weil die Anzahl der Rechenoperationen reduziert werden kann.

Darüber hinaus wird vorgeschlagen, dass die Ausgangsdaten der ersten Anwendung mit den Fahrzeugbetriebsdaten des Fremdfahrzeugs verglichen werden. Diese Ausgestaltung ermöglicht es, einen Vergleich unabhängig von der redundanten zweiten Anwendung durchzuführen. Dadurch kann die Zuverlässigkeit weiter erhöht werden.

Insbesondere wird vorgeschlagen, dass abhängig von diesem Vergleich die wenigstens eine redundante zweite Anwendung vom Bereitschaftszustand in den Aktivzustand wechselt. Diese Ausgestaltung ermöglicht es, während des Bereitschaftszustands der wenigstens einen redundanten zweiten Anwendung eine Überprüfung der Zuverlässigkeit durchzuführen und bei einem geringeren Sicherheitspegel als dem vorgegebenen Sicherheitspegel abhängig von dem Vergleich die wenigstens eine redundante zweite Anwendung wieder in den Aktivzustand zu überführen, sodass zum Beispiel die redundante zweite Anwendung die bestimmungsgemäße Funktionalität der ersten Anwendung parallel bereitstellt, sodass die Fahrzeugbetriebsdaten des Fremdfahrzeugs nicht mehr benötigt werden. Dies ist insbesondere dann von Vorteil, wenn sich aufgrund einer unzuverlässig werdenden Kommunikation zwischen dem Kraftfahrzeug und dem Fremdfahrzeug die empfangenen Fahrzeugbetriebsdaten des Fremdfahrzeugs nicht mehr hinreichend für eine zuverlässige Funktion der Fahrzeugsteuereinrichtung nutzen lassen, weil sie beispielsweise gestört oder unvollständig sind.

Weiterhin wird vorgeschlagen, dass zum Wechseln zwischen dem Bereitschaftszustand und dem Aktivzustand der wenigstens einen redundanten zweiten Anwendung ein vorgegebener Sicherheitspegel berücksichtigt wird. Der Sicherheitspegel dient dazu, ein Maß für erforderliche Redundanz zur zuverlässigen automatisierten Führung des Kraftfahrzeugs vorzugeben. Der Sicherheitspegel kann situationsabhängig sein. Der Sicherheitspegel kann jeweils aktuell für eine bestimmte Fahrsituation beziehungsweise für einen bestimmten Fahrzustand ermittelt und mit dem vorgegebenen Sicherheitspegel verglichen werden. Ist der ermittelte Sicherheitspegel kleiner als der vorgegebene Sicherheitspegel, kann vorgesehen sein, dass die redundante zweite Anwendung permanent im Aktivzustand bleibt, das heißt, ein Wechsel in den Bereitschaftszustand verhindert wird.

Es wird ferner vorgeschlagen, dass abhängig von einem Vergleich der Ausgangsdaten von wenigstens der ersten oder der wenigstens einen redundanten zweiten Anwendung mit den Fahrzeugbetriebsdaten des Fremdfahrzeugs ein Warnsignal abgegeben wird. Das Warnsignal kann vorzugsweise dann abgegeben werden, wenn der Vergleich ergibt, dass die Ausgangsdaten der jeweiligen Anwendung von den vorzugsweise relevanten Fahrzeugbetriebsdaten des Fremdfahrzeugs signifikant abweichen. Zu diesem Zweck kann ein Toleranzbereich vorgegeben werden, innerhalb dessen ein Warnsignal nicht abgegeben zu werden braucht. Das Warnsignal wird vorzugsweise dann abgegeben, wenn durch die Fahrzeugbetriebsdaten des Fremdfahrzeugs der Toleranzbereich, der vorzugsweise durch die Ausgangsdaten vorgegeben sein kann, verlassen wird. Das Warnsignal kann dazu dienen, eine Meldung an einen Fahrzeuginsassen des Kraftfahrzeugs, insbesondere den Fahrer des Kraftfahrzeugs, abzugeben. Es kann aber lediglich ein Warnsignal für die Fahrzeugsteuereinrichtung abgegeben werden.

Gemäß einer Weiterbildung wird vorgeschlagen, dass ein aktueller Fahrzustand des Kraftfahrzeugs ermittelt wird und die wenigstens eine redundante zweite Anwendung ergänzend abhängig vom aktuellen Fahrzustand im Aktivzustand oder dem Bereitschaftszustand betrieben wird. Diese Weiterbildung erlaubt es zu berücksichtigen, dass bei bestimmten Fahrsituationen, die durch einen aktuell durch den aktuellen Fahrzustand des Kraftfahrzeugs bestimmt sein können, das Einnehmen des Bereitschaftszustands durch die wenigstens eine redundante zweite Anwendung möglichst vermieden werden soll. Dies kann zum Beispiel dann vorteilhaft sein, wenn das Kraftfahrzeug in einem Bereich betrieben wird, bei dem sehr viele Fußgänger, beispielsweise Kinder oder dergleichen, im Umfeld vorhanden sind. Dies kann eine besonders hohe Zuverlässigkeit beziehungsweise einen besonders hohen Sicherheitspegel erfordern, wobei berücksichtigt werden kann, dass das Fremdfahrzeug möglicherweise nicht alle relevanten Umfelddaten zur Verfügung stellen vermag.

Darüber hinaus wird vorgeschlagen, dass eine Zuverlässigkeit einer Kommunikationsverbindung zum Fremdfahrzeug ermittelt wird und die wenigstens eine redundante zweite Anwendung ergänzend abhängig von der Zuverlässigkeit im Aktivzustand oder im Bereitschaftszustand betrieben wird. Diese Ausgestaltung erlaubt es, abhängig von der Zuverlässigkeit der Kommunikationsverbindung die redundante zweite Anwendung im Aktivzustand zu halten oder es zu erlauben, den Bereitschaftszustand einzunehmen. Ist die Kommunikationsverbindung beispielsweise unzuverlässig, das heißt, dass die Fahrzeugbetriebsdaten des Fremdfahrzeugs nur zeitweise oder auch nur unvollständig übermittelt werden, wird der Aktivzustand beibehalten. Erst wenn die Zuverlässigkeit ein vorgegebenes Maß erreicht, kann das Einnehmen des Bereitschaftszustands freigegeben werden.

Ferner wird vorgeschlagen, dass die wenigstens eine redundante zweite Anwendung ergänzend abhängig von einer Priorität in Bezug auf die erste und die wenigstens eine redundante zweite Anwendung im Aktivzustand oder dem Bereitschaftszustand betrieben wird. Die Priorität kann zum Beispiels anwendungsbezogen sein. Beispielsweise kann sich die Priorität darauf beziehen, dass eine Anwendung Fußgänger erkennt. Eine derartige Anwendung wird in der Regel eine große Priorität aufweisen. Eine andere Anwendung kann sich zum Beispiel darauf beziehen, Wetterbedingungen zu ermitteln. Eine derartige Anwendung kann zum Beispiel eine entsprechend kleinere Priorität aufweisen. Die Priorität braucht im bestimmungsgemäßen Betrieb der Fahrzeugsteuereinrichtung nicht konstant zu sein und kann situationsabhängig variiert werden. Dem Grunde nach kann die Priorität jedoch auch fest vorgegeben sein.

Es wird ferner vorgeschlagen, dass die wenigstens eine redundante zweite Anwendung ergänzend abhängig von einem Kolonnenbetrieb im Bereitschaftszustand betrieben wird. Bei dieser Weiterbildung kann vorgesehen sein, dass die Fahrzeugsteuereinrichtung einen Kolonnenbetrieb zu erkennen vermag und mit einem oder mehreren Fremdfahrzeugen einen entsprechenden Betriebsmodus einnimmt. Eines der Kraftfahrzeuge wird dann ein Führungsfahrzeug sein, wohingegen die anderen Fahrzeuge Folgefahrzeuge sind. Bei einem solchen Kolonnenbetrieb können eine Reihe von für den zumindest teilweise autonomen Betrieb des Kraftfahrzeugs als Folgefahrzeug erforderlichen Fahrzeugführungsdaten vom Führungsfahrzeug bereitgestellt werden, sodass jeweilige redundante zweite Anwendungen für eine Reihe von Funktionalitäten nicht erforderlich zu sein brauchen. Daher kann bei einem solchen Betriebszustand die jeweilige redundante zweite Anwendung überwiegend beziehungsweise dauerhaft im Bereitschaftszustand sein. Lediglich wenn der Kolonnenbetrieb beendet wird, braucht dann die wenigstens eine redundante zweite Anwendung aktiviert zu werden, indem sie vom Bereitschaftszustand in den Aktivzustand wechselt.

Die für das erfindungsgemäße Verfahren angegebenen Vorteile und Wirkungen gelten gleichermaßen auch für das Rechnerprogrammprodukt der Erfindung, die Fahrzeugsteuereinrichtung der Erfindung sowie das Kraftfahrzeug gemäß der Erfindung und umgekehrt. Insbesondere können daher Verfahrensmerkmale auch vorrichtungstechnisch und umgekehrt formuliert sein.

Zu der Erfindung gehören auch Weiterbildungen der erfindungsgemäßen Fahrzeugsteuereinrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Fahrzeugsteuereinrichtung und des erfindungsgemäßen Kraftfahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: in einer schematischen Draufsicht zwei hintereinander in die gleiche Richtung fahrende Kraftfahrzeuge, die vorliegend gemäß einem ersten Szenario unabhängig voneinander autonom geführt sind;
- Fig. 2: eine schematische Darstellung wie Fig. 1, wobei die Kraftfahrzeuge gemäß einem zweiten Szenario über Car-to-Car-Kommunikation miteinander in Kommunikationsverbindung stehen und Fahrzeugbetriebsdaten austauschen, wobei das folgende Kraftfahrzeug redundante Anwendungen in einem Bereitschaftszustand betreibt;
- Fig. 3: eine schematische Darstellung wie Fig. 2, bei der eine redundante zweite Anwendung gemäß einem dritten Szenario in einem Passivbetriebszustand betrieben wird, bei dem die zuständige Rechnerinstanz deaktiviert ist;
- Fig. 4: eine schematische Darstellung wie Fig. 3 mit drei nebeneinander in die gleiche Richtung auf einer Straße fahrenden Kraftfahrzeugen gemäß einem vierten Szenario, wobei in Bezug auf das mittlere Fahrzeug zwei redundante zweite Anwendungen in einem Passivbetriebszustand betrieben werden;
- Fig. 5: eine schematische Darstellung wie Fig. 1 für einen Kolonnenbetrieb gemäß einem fünften Szenario;
- Fig. 6: eine schematische Seitenansicht eines Kraftfahrzeugs gemäß der Erfindung; und
- Fig. 7: ein schematisches Ablaufdiagramm für eine Verfahrensführung gemäß der Erfindung.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

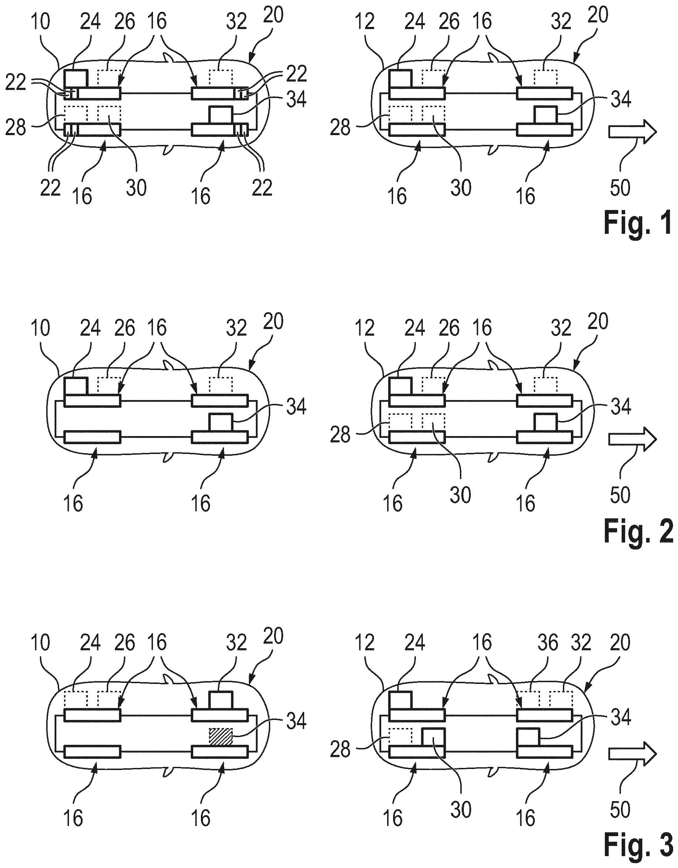

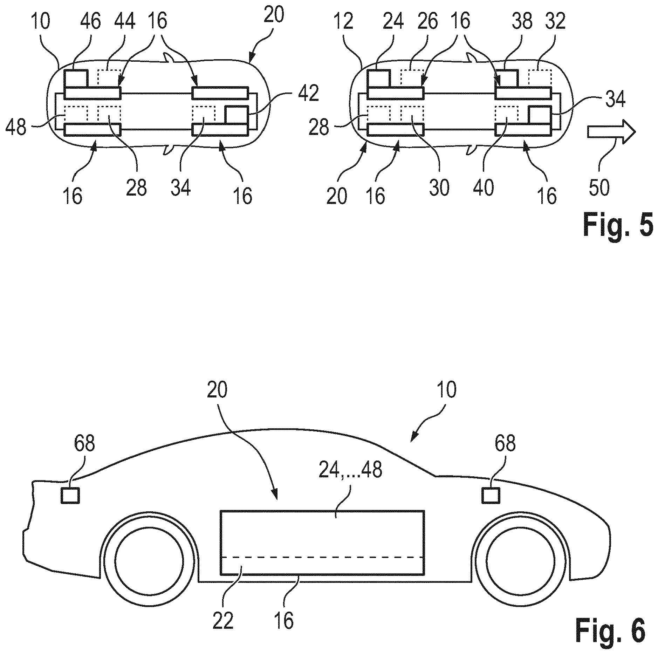

Fig. 6 zeigt in einer schematischen Seitenansicht ein Kraftfahrzeug 10 mit einer Fahrzeugsteuereinrichtung 20, die ausgebildet ist, das Kraftfahrzeug 10 zumindest teilweise automatisiert zu führen. Vorliegend ist ein zumindest teilweise autonomer Fahrbetrieb vorgesehen. Die Fahrzeugsteuereinrichtung 20 weist eine Rechnereinheit 16 auf, die vorliegend - wie aus den Fig. 1 bis 5 ersichtlich ist - vier Rechnerknoten CN1 bis CN4 umfasst. Die Rechnerknoten CN1 bis CN4 stehen über einen Kommunikationsbus miteinander in Kommunikationsverbindung. In den Figuren ist der Kommunikationsbus nicht bezeichnet. Aus Fig. 6 ist ferner ersichtlich, dass die Rechnereinheit 16 Rechnerinstanzen 22 aufweist, die von Anwendungen 24 bis 48, die im Folgenden noch erläutert werden, genutzt werden beziehungsweise diesen zugeordnet sind.

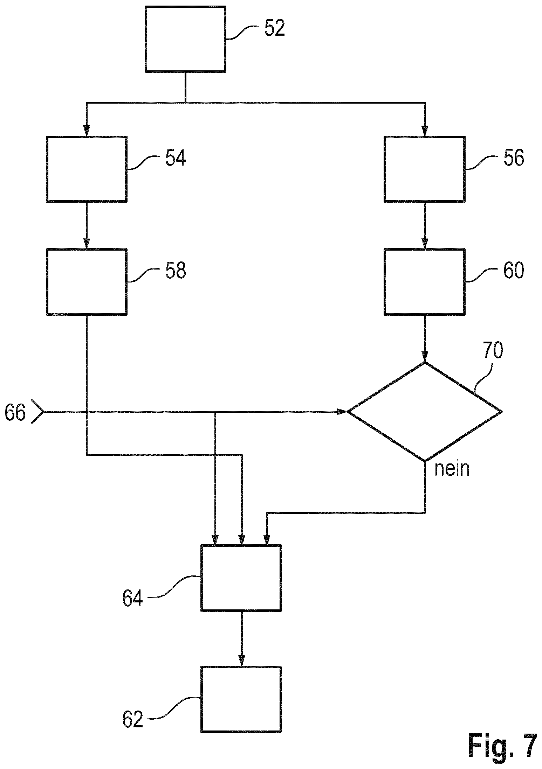

Das Kraftfahrzeug 10 umfasst ferner Umfeldsensoren 68, die entsprechende Umfeldsignale an die Fahrzeugsteuereinrichtung 20, insbesondere die Rechnereinheit 16, übermitteln. Darüber hinaus stellt die Fahrzeugsteuereinrichtung 20 auch Kraftfahrzeugbetriebsdaten zur Verfügung, die Betriebszustände des Kraftfahrzeugs 10 kennzeichnen. Die Umfelddaten und die Kraftfahrzeugsbetriebsdaten sind vorliegend mit dem Bezugszeichen 52 (Fig. 7) bezeichnet.

Fig. 7 zeigt in einem schematischen Ablaufdiagramm einen möglichen verfahrensmäßigen Ablauf gemäß der Erfindung. In alternativen Ausgestaltungen können natürlich auch noch ergänzende und/oder alternative Schritte, beispielsweise gemäß Merkmalen von abhängigen Ansprüchen vorgesehen sein.

Gemäß Fig. 7 sind eine erste Anwendung 54 und eine redundante zweite Anwendung 56 vorgesehen. Die Erfindung ist jedoch nicht auf die Nutzung von lediglich zwei Anwendungen beschränkt. Natürlich können auch mehrere redundante zweite Anwendungen vorgesehen sein. Die erste Anwendung 54 stellt Ausgangsdaten 56 und die redundante zweite Anwendung Ausgangsdaten 60 bereit. Die Ausgangsdaten 58, 60 werden durch die jeweilige Anwendung 54, 56 abhängig von den Kraftfahrzeugsbetriebsdaten und/oder Umfelddaten 52 bereitgestellt.

Die Ausgangsdaten 58, 60 dienen unter anderem dazu, zum Ermitteln von Fahrzeugführungsdaten 62 beizutragen, die es erlauben, das Kraftfahrzeug 10 zumindest teilweise automatisiert zu führen. Die Fahrzeugführungsdaten 62 können zum Beispiel eine Trajektorie aufweisen, die dem Führen des Kraftfahrzeugs 10 zugrundegelegt werden kann.

Wie anhand der Fig. 1 bis 5 im Folgenden noch erläutert werden wird, steht das Kraftfahrzeug 10 über Car-to-Car-Kommunikation mit einem Fremdfahrzeug 12, welches ebenfalls ein Kraftfahrzeug ist, in Kommunikationsverbindung (Fig. 2 bis 5). Das Kraftfahrzeug 10 empfängt vom Fremdfahrzeug 12 dessen Fahrzeugbetriebsdaten 66. Diese Fahrzeugbetriebsdaten 66 dienen dem zumindest teilweise automatisierten Führen des Fremdfahrzeugs 12 und können für das Führen des Kraftfahrzeugs 10 ergänzend genutzt werden. Insbesondere ist es möglich, die Funktion der Fahrzeugsteuereinrichtung 20 zu überwachen und unter Umständen auch zu vereinfachen, indem nämlich die redundante zweite Anwendung 56 von einem Aktivzustand, in dem das Ermitteln der Fahrzeugführungsdaten 62 unter Berücksichtigung der Ausgangsdaten 60 der redundanten zweiten Anwendung 56 erfolgt, in einen Bereitschaftszustand wechselt, in dem eine von der redundanten zweiten Anwendung 56 genutzte Rechnerinstanz 22 der Rechnereinheit 16 zumindest mit geringerer Häufigkeit als im Aktivzustand ausgeführt wird. Besonders vorteilhaft kann die entsprechende Rechnerinstanz 22 sogar vollständig freigegeben beziehungsweise deaktiviert werden, sodass Rechnerkapazität der Rechnereinheit 16 für andere Funktionalitäten zur Verfügung gestellt werden kann. Darüber hinaus kann natürlich auch durch das Deaktivieren der Rechnerinstanz 22 ein Energieverbrauch, insbesondere in Bezug auf die Rechnereinheit 16, reduziert werden.

Zu diesem Zweck ist vorliegend vorgesehen, dass die Fahrzeugbetriebsdaten 66 des Fremdfahrzeugs 12 einer Fahrzeugführungsdatenermittlungseinheit 64 zum Ermitteln der Fahrzeugführungsdaten zugeführt werden. Darüber hinaus werden die Fahrzeugbetriebsdaten 66 ergänzend einer Vergleichseinheit 70 zugeführt, der ebenfalls die Ausgangsdaten 60 zugeführt werden.

Die Vergleichseinheit 70 vergleicht die Fahrzeugbetriebsdaten 66 mit den Ausgangsdaten 60 dahingehend, dass die Fahrzeugbetriebsdaten 66 in Bezug auf die Ausgangsdaten 60 in einem hierdurch vorgegebenen Toleranzband sind. Ist dies der Fall, werden von der Vergleichseinheit 70 anstelle der Ausgangsdaten 60 die Fahrzeugbetriebsdaten 66 an die Fahrzeugführungsdatenermittlungseinheit 64 übermittelt. Zugleich gibt die Vergleichseinheit 70 ein entsprechendes Steuersignal an die Fahrzeugsteuereinrichtung 20 ab, dass die redundante zweite Anwendung 56 in einen Bereitschaftszustand wechseln kann. Die Fahrzeugsteuereinrichtung 20 beendet dann die redundante zweite Anwendung 56, sodass die durch diese redundante zweite Anwendung 56 genutzte Rechnerinstanz 22 deaktiviert werden kann, sofern keine weiteren Wechselhindernisse vorliegen.

Fig. 1 zeigt nun eine Ausgangssituation gemäß einem ersten Szenario, bei der zwei zumindest teilweise autonom geführte Kraftfahrzeuge 10, 12 hintereinander in die gleiche Richtung 50 fahren. Das Fremdfahrzeug 12 ist das vorausfahrende Kraftfahrzeug, während das Kraftfahrzeug 10 das folgende Kraftfahrzeug ist. Der Aufbau der Fahrzeugsteuereinrichtungen 20 der Kraftfahrzeuge 10, 12 ist vorliegend im Wesentlichen gleich, weshalb er lediglich für das Kraftfahrzeug 10 erläutert wird. Bei alternativen Ausgestaltungen können die Fahrzeugsteuereinrichtungen 20 auch voneinander abweichen.

Die erste Anwendung 54 ist in der Regel im Aktivzustand betrieben. Dieser Aktivzustand wird bei diesem Szenario üblicherweise auch nicht beendet.

Zu erkennen ist, dass das Kraftfahrzeug 10 die Fahrzeugsteuereinrichtung 20 mit der Rechnereinheit 16 aufweist, wobei die Rechnereinheit 16 vier Rechnerknoten CN1 bis CN4 aufweist, die untereinander über einen nicht weiter bezeichneten Kommunikationsbus miteinander in Kommunikationsverbindung stehen. Jeder Rechnerknoten CN1 bis CN4 weist mehrere Rechnerinstanzen 22 auf, die je nach Bedarf aktiviert beziehungsweise deaktiviert werden können. Sie können jedoch auch hinsichtlich der Häufigkeit ihrer Nutzung variabel aktiviert werden.

An den Rechnerknoten CN1 bis CN4 sind jeweilige Anwendungen 24 bis 34 vorgesehen, wie aus Fig. 2 ersichtlich. Die Anwendungen 24, 28, 32 sind vorliegend Trajektorienplaneranwendungen, wohingegen die Anwendungen 26, 30, 34 Fußgängerdetektionsanwendungen sind. Diese Anwendungen sind lediglich beispielhaft vorgesehen, um die Funktion der Erfindung zu erläutern. Bei alternativen Ausgestaltungen können hier auch weitere oder andere Anwendungen vorgesehen sein.

Mit einer durchgezogenen Linie ist dargestellt, dass die Anwendungen 24 und 34 im Aktivzustand betrieben sind. Dagegen sind die Anwendungen 26, 28, 30, 32 mit einer gestrichelten Linie dargestellt, was bedeutet, dass sie zwar in einem Aktivzustand betrieben werden, jedoch deren Ausgangssignale beziehungsweise Ausgangsdaten zum Ermitteln der Fahrzeugführungsdaten nicht herangezogen werden. Diese Anwendungen dienen als redundante zweite Anwendungen, um im Bedarfsfall unverzüglich genutzt werden zu können. Der autonome Betrieb des Kraftfahrzeugs 10 basiert daher vorliegend unter anderem überwiegend auf den Anwendungen 24 und 34.

Fig. 2 zeigt nun eine vergleichbare Situation wie in Fig. 1 in einer schematischen Darstellung gemäß einem zweiten Szenario, wobei das Kraftfahrzeug 10 mit dem Fremdfahrzeug 12 in Kommunikationsverbindung steht und vom Fremdfahrzeug 12 Fahrzeugbetriebsdaten 66 empfängt. Diese Fahrzeugbetriebsdaten 66 können zum Beispiel eine relative Beschleunigung, Ausgangsdaten eines Trajektorienplaners und einer Fußgängerdetektionsanwendung umfassen. Diese Daten können vom Kraftfahrzeug 10 beziehungsweise der Fahrzeugsteuereinrichtung 20 empfangen und genutzt werden, um zu ermitteln, welche redundanten Anwendungen beziehungsweise Instanzen für den bestimmungsgemäßen autonomen Fahrbetrieb des Kraftfahrzeugs 10 unter Beachtung eines vorgegebenen Sicherheitspegels nicht erforderlich sind. In der vorliegenden Ausgestaltung zeigt sich, dass die Anwendungen 28 und 30 für die erforderliche Redundanzfunktionalität nicht mehr erforderlich sind. Daher ist vorliegend vorgesehen, dass abhängig von den Fahrzeugbetriebsdaten 66 die Anwendungen 28, 30 gegenüber dem ersten Szenario gemäß Fig. 1 vom Aktivzustand in den Bereitschaftszustand wechseln und vorliegend sogar in einen Passivzustand, bei dem sie vollständig deaktiviert sind. Dadurch werden auch entsprechende Rechnerinstanzen 22 für die Rechnereinheit 16 freigegeben, sodass der Energieverbrauch reduziert und/oder Rechnerressourcen freigegeben werden können.

In dem Szenario gemäß Fig. 2 ist lediglich vorgesehen, dass die redundanten zweiten Anwendungen in den Bereitschaftszustand wechseln. Die aktiven ersten Anwendungen 24, 34 bleiben weiter voll im Aktivzustand. Daher kann das Kraftfahrzeug 10 dem Grunde nach weiterhin unabhängig vom Fremdfahrzeug 12 betrieben werden. Jedoch können die Fahrzeugbetriebsdaten 66 des Fremdfahrzeugs 12 auch als Redundanz für die redundanten zweiten Anwendungen genutzt werden, die im Bereitschaftszustand sind. Dadurch kann der Sicherheitspegel, der vorgegeben ist, weiterhin eingehalten werden. Sollte eine aktive Anwendung des Kraftfahrzeugs 10 gestört sein, würde der Betrieb des Kraftfahrzeugs 10 auf der Kommunikation mit dem Fremdfahrzeug 12 basieren, bis eine neue Anwendung aktiviert ist. Gleichermaßen würde, wenn die Kommunikation gestört wäre, das Kraftfahrzeug 10 nur auf Basis der aktiven Anwendungen betrieben werden, bis neue aktive Instanzen ausgeführt werden oder die Kommunikation wiederhergestellt ist. In diesem Fall würden lediglich die Ausgangsdaten der redundanten zweiten Anwendung wieder für das Ermitteln der Fahrzeugführungsdaten 62 herangezogen.

Bei dem in Fig. 2 dargestellten zweiten Szenario fährt das Kraftfahrzeug 10 hinter dem Fremdfahrzeug 12. In diesem Fall können die Ausgangsdaten der Trajektorienplaneranwendung 24 des Fremdfahrzeugs 12 und der Fußgängerdetektionsanwendung 34 vom Kraftfahrzeug 10 ebenfalls genutzt werden. Die Datenübertragung als solche erlaubt es dem Kraftfahrzeug 10 daher, die entsprechenden redundanten zweiten Anwendungen 28, 30 in den Bereitschaftszustand zu überführen. Dies wird jedoch nur dann ausgeführt, wenn die weiteren Anforderungen bezüglich des Sicherheitspegels gehalten werden können.

Fig. 3 zeigt eine schematische Darstellung wie Fig. 2 gemäß einem dritten Szenario, weshalb für die folgenden Erläuterungen ergänzend auf die Ausführungen zu Fig. 2 verwiesen wird. Im Folgenden sollen lediglich die Unterschiede dargestellt werden.

Fig. 3 zeigt die Möglichkeit, bei einer Anwendung, die eine redundante zweite Anwendung ist, eine Aktivierungsrate beziehungsweise Häufigkeit der Nutzung zu reduzieren. Das bedeutet, dass die entsprechende Anwendung weniger häufig ausgeführt wird. Jedoch bleibt die entsprechende Anwendung dem Grunde nach weiterhin aktiviert (degraded), sodass sie Eingangsdaten für ihren bestimmungsgemäßen Betrieb empfängt, verarbeitet und entsprechende Ausgangsdaten bereitstellt. Jedoch werden für die Verarbeitung der Daten weniger Rechnerressourcen der Rechnereinheit 16 zur Verfügung gestellt. In Fig. 3 vergleicht zum Beispiel das Kraftfahrzeug 10 die vom Fremdfahrzeug 12 erhaltenen Fahrzeugbetriebsdaten 66 mit den Ausgangsdaten 58, 60, um zu bestimmen, ob ein sicheres Führen des Kraftfahrzeugs 10 gewährleistet werden kann. Im anderen Fall wird die im Bereitschaftsmodus betriebene Anwendung in den Aktivzustand überführt und das Kraftfahrzeug 10 basierend auf den Ausgangsdaten 60 dieser Anwendung geführt.

Ein wichtiger Vorteil des Bereitschaftszustands mit geringerer Häufigkeit ist, dass es dem Kraftfahrzeug 10 weiterhin möglich ist, sehr schnell auf Basis der Ausgangsdaten 60 betrieben werden zu können, zum Beispiel wenn die Fußgängerdetektionsanwendung 28 einen Fußgänger detektiert, der vom Fremdfahrzeug 12 nicht erkannt wurde. Würde nämlich diese Anwendung nur ohne Nutzung der Ausgangssignale 60 betrieben, könnte das Kraftfahrzeug 10 diese nicht nutzen, um den Fußgänger detektieren zu können. Der Weiterbetrieb der redundanten zweiten Anwendung 56 mit einer geringeren Häufigkeit hat hier also einen Vorteil in Bezug auf das sichere autonome Führen des Kraftfahrzeugs. Dies ist in Fig. 3 für das Kraftfahrzeug 10 mit dem grau unterlegten Feld für die Anwendung 34 dargestellt.

Auch wenn die Ausgestaltungen gemäß Fig. 3 und Fig. 2 ähnlich erscheinen, sind sie doch unterschiedlich. Das Szenario gemäß Fig. 2 kann zum Beispiel in einer Stadt oder einem urbanen Umfeld auftreten. In diesem Fall ist für das Kraftfahrzeug 10 ein höherer Sicherheitspegel, insbesondere in Bezug auf die Erkennung von Fußgängern, gefordert, weil eine Wahrscheinlichkeit, dass viele Fußgänger in der Umgebung vorhanden sind, groß ist. Für diesen Fall verbleibt eine Fußgängerdetektionsanwendung als aktive Anwendung 54 und eine andere kann im Bereitschaftsmodus betrieben werden, insbesondere in einem Passivzustand. Das Szenario gemäß Fig. 3 kann zum Beispiel bei einem Betrieb auf einer Autobahn angenommen werden, wo erheblich weniger Fußgänger zu erwarten sind. Aus diesem Grund ist es hier möglich, einen Bereitschaftszustand zu wählen, bei dem die Häufigkeit der Nutzung der Rechnerinstanz 22 geringer als im Aktivzustand ist.

In diesem Zusammenhang wird ferner darauf hingewiesen, dass im Ausführungsbeispiel gemäß Fig. 2 eine der Trajektorienplaneranwendungen im Aktivzustand und eine in einem Zustand betrieben wird, bei der die entsprechenden Ausgangsdaten nicht genutzt werden (active-high). Dies ist deshalb vorgesehen, weil sowohl bei urbanen Szenarien als auch bei Autobahnszenarien die Trajektorie mit derselben Häufigkeit beziehungsweise Frequenz berechnet werden können soll. Daher soll die Trajektorienplaneranwendung nicht in einem Modus mit geringerer Häufigkeit betrieben werden.

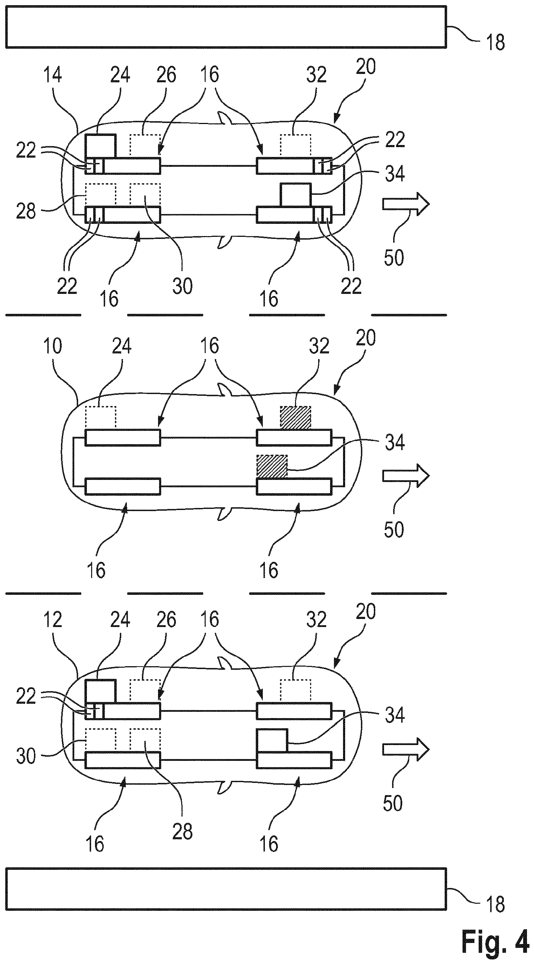

Fig. 4 zeigt eine weitere Ausgestaltung gemäß einem vierten Szenario, bei dem zusätzlich ein zweites Fremdfahrzeug 14 vorgesehen ist. Alle drei Kraftfahrzeuge 10 bis 14 fahren in die gleich Richtung 50 nebeneinander auf jeweiligen benachbarten Fahrspuren. Das Fremdfahrzeug 14 fährt auf einer linken Fahrspur und überholt das Kraftfahrzeug 10, welches auf der mittleren Fahrspur fährt. Das Fremdfahrzeug 12 fährt auf einer rechten Fahrspur. Alle drei Kraftfahrzeuge 10 bis 14 stehen in Kommunikationsverbindung miteinander.

Das Kraftfahrzeug 10 kann wegen dieser Kommunikation seinen autonomen Betrieb mit Anwendungen im Bereitschaftszustand realisieren, wobei die jeweiligen Anwendungen mit geringerer Häufigkeit als im Aktivzustand ausgeführt werden. Dies ist deshalb möglich, weil kreuzende Fußgänger für die mittlere Fahrbahn außerordentlich unwahrscheinlich sind und die Fremdfahrzeuge 12 und 14 das Kraftfahrzeug 10 vorwarnen können, wenn sie einen Fußgänger detektieren. Jedoch ist die entsprechende Anwendung nicht vollständig heruntergefahren, weil ein Minimum an Sicherheitsanforderung erfüllt sein soll.

Gleichermaßen kann das Kraftfahrzeug 10 seine Trajektorie ermitteln, wobei die Trajektorienplaneranwendung 32 hier mit geringerer Häufigkeit als im Aktivzustand ausgeführt werden kann. Dies ist deshalb möglich, weil für das Kraftfahrzeug 10 in diesem Szenario, welches zwischen den Fremdfahrzeugen 12 und 14 in die gleiche Richtung fährt, keine großen Möglichkeiten für Trajektorienänderungen vorhanden sind und das Kraftfahrzeug 10 aufgrund der Kommunikation weiß, welche Positionen für die Fremdfahrzeuge 12 und 14 zu erwarten sind. Darüber hinaus können jegliche Objekte, die in Fahrtrichtung durch die Fremdfahrzeuge 12 und 14 erkannt werden, an das Kraftfahrzeug 10 übermittelt werden.

Die Straße mit den Fahrbahnen, auf denen die Kraftfahrzeuge 10 bis 14 fahren, sind seitlich von Bürgersteigen 18 eingefasst.

Basierend auf Fig. 1 kann im Folgenden ein weiteres Szenario möglich sein. Bei diesem Szenario wird angenommen, dass kein Passivzustand für irgendeine der Anwendungen 24 bis 34 auftritt. Beide Fahrzeuge 10, 12 kommunizieren miteinander und übermitteln gegenseitig relevante Daten. Obwohl beide Fahrzeuge 10, 12 ihre jeweiligen Rechnereinheiten 16 rekonfigurieren könnten, um Ressourcen zu sparen, ist ein entsprechender Passivbetriebszustand nicht vorgesehen. Die Kommunikation zwischen den Kraftfahrzeugen 10 und 12 dient daher als Validierungsquelle, das heißt, dass ein jeweiliges der Kraftfahrzeuge 10, 12 die empfangenen Fahrzeugbetriebsdaten 66 dazu nutzt, die Ausgangsdaten 58, 60 der jeweiligen Anwendungen 54, 56 zu validieren.

Fig. 5 zeigt eine weitere Ausgestaltung der Erfindung unter Nutzung eines Kolonnenbetriebs. Bei dieser Ausgestaltung ist ein Führungsfahrzeug vorgesehen, welches hier das Kraftfahrzeug 12 ist. Dem Führungsfahrzeug 12 folgt das Kraftfahrzeug 10 als Folgefahrzeug. Auch wenn nur zweit Kraftfahrzeuge vorliegend vorgesehen sind, kann die hierdurch gebildete Kolonne natürlich eine Mehrzahl von aufeinander folgenden Kraftfahrzeugen aufweisen.

Das Führungsfahrzeug 12 übermittelt relevante Fahrzeugbetriebsdaten 66 zum Folgefahrzeug 10. In diesem Fall, bei dem die übermitteln Fahrzeugbetriebsdaten 66 alle erforderlichen Daten für das autonome Folgen des Folgefahrzeugs 10 umfassen, erhält das Folgefahrzeug 10 entsprechende Anweisungen vom Führungsfahrzeug 12 bezüglich dessen Betriebs. Hierfür sind entsprechende Anwendungen vorgesehen, nämlich Kolonnenmanageranwendungen 38, 40, 46, 48 sowie Kommunikationsüberwachungen 42, 44. Diese Anwendungen können dazu genutzt werden, das Kolonnenverhalten zu realisieren.

Die Kolonnenmanageranwendungen 38, 40, 46, 48 können dazu genutzt werden, zu ermitteln, wann eine Kolonne gebildet werden kann. Darüber hinaus können die Kolonnenmanageranwendungen 38, 40, 46, 48 zum Beispiel bestimmen, welches der Kraftfahrzeuge 10, 12 das Führungsfahrzeug sein soll. Die Kommunikationsüberwachung 42, 44 kann kontinuierlich die Zuverlässigkeit und Qualität der Kommunikationsverbindung des Folgefahrzeugs 10 mit dem Führungsfahrzeug 12 validieren. Diese Anwendung zeigt an, wann das Folgefahrzeug 10 die eigene Kontrolle wieder übernehmen können muss. Eine solche Übernahme ist zum Beispiel erforderlich, wenn die Qualität der Kommunikationsverbindung abnimmt, die Daten unvollständig oder ungültig sind und/oder dergleichen.

Das Folgefahrzeug 10 führt vorliegend alle Anwendungen aus, die erforderlich sind, das Kraftfahrzeug 10 autonom führen zu können, wobei lediglich die Ausgangsdaten 58, 60 zum Ermitteln der Fahrzeugführungsdaten 62 nicht berücksichtigt werden. Wenn die Kommunikationsüberwachung 42 die Übernahme der Steuerung für das Kraftfahrzeug 10 anfordert, können die Ausgangsdaten 58, 60 der aktiven Anwendungen zum Ermitteln der Fahrzeugführungsdaten 62 unverzüglich herangezogen werden, um die Steuerung des Kraftfahrzeugs 10 unabhängig von dem Führungsfahrzeug 12 übernehmen zu können.

Jedes Kraftfahrzeug hat eine begrenzte Anzahl von Ressourcen, insbesondere in Bezug auf die Rechnereinheit 16. Die Erfindung ermöglicht das Ausführen von Rechnerinstanzen 22 und das Deaktivieren von Anwendungen derart, dass Rechnerressourcen gespart und/oder auch Energie gespart werden können. Darüber hinaus kann mit der Erfindung auch die Sicherheit weiter verbessert werden, indem die Fahrzeugbetriebsdaten 66 des Fremdfahrzeugs 12 zum Verifizieren von Ausgangsdaten 58, 60 des eigenen Kraftfahrzeugs 10 herangezogen werden können.

Bei der Ausgestaltung gemäß Fig. 1 kann die Systemzuverlässigkeit der Fahrzeugsteuereinrichtung 20 verbessert werden, weil die Kraftfahrzeuge 10, 12 die Ausgangsdaten 58, 60 durch die des jeweiligen anderen Kraftfahrzeugs 10, 12 verifizieren können.

Bei dem Szenario gemäß der Fig. 5 ist ein Bereitschaftszustand für die gemeinsam ausgeführten Anwendungen vorgesehen. Daher kann eine Freigabe von Rechnerressourcen erreicht werden und insbesondere ein energieeffizienteres System erreicht werden. Jedoch ist zu bedenken, dass das Folgefahrzeug 10 bei einer gestörten Kommunikationsverbindung zum Führungsfahrzeug 12 Zeit benötigt, um ein etwaiges vollautonomes Führen des Folgefahrzeugs 10 wiederherstellen zu können.

Die Ausführungsbeispiele dienen ausschließlich der Erläuterung der Erfindung und sollen diese nicht beschränken.

### Bezugszeichenliste

- 10: Kraftfahrzeug
- 12: Fremdfahrzeug
- 14: Fremdfahrzeug
- 16: Rechnereinheit
- 18: Bürgersteig
- 20: Fahrzeugsteuereinrichtung
- 22: Rechnerinstanz
- 24: Trajektorienplaneranwendung
- 26: Fußgängerdetektionsanwendung
- 28: Trajektorienplaneranwendung
- 30: Fußgängerdetektionsanwendung
- 32: Trajektorienplaneranwendung
- 34: Fußgängerdetektionsanwendung
- 36: Fußgängerdetektionsanwendung
- 38: Kolonnenmanageranwendung
- 40: Kolonnenmanageranwendung
- 42: Kommunikationsüberwachung
- 44: Kommunikationsüberwachung
- 46: Kolonnenmanageranwendung
- 48: Kolonnenmanageranwendung
- 50: Fahrtrichtung
- 52: Kraftfahrzeugbetriebsdaten und/oder Umfelddaten
- 54: erste Anwendung
- 56: redundante zweite Anwendung
- 58: Ausgangsdaten
- 60: Ausgangsdaten
- 62: Fahrzeugführungsdaten
- 64: Fahrzeugführungsdatenermittlungseinheit
- 66: Fahrzeugbetriebsdaten
- 68: Umfeldsensor
- 70: Vergleichseinheit

## Patentansprüche

1. Verfahren zum zumindest teilweise automatisierten Führen eines Kraftfahrzeugs (10), wobei
- eine erste Anwendung (54) und wenigstens eine redundante zweite Anwendung (56) jeweils Ausgangsdaten (58, 60) abhängig von Kraftfahrzeugbetriebsdaten und/oder Umfelddaten (52) bereitstellen,
- Fahrzeugführungsdaten (62) zum zumindest teilweise automatisierten Führen des Kraftfahrzeugs (10) abhängig von den Ausgangsdaten (58, 60) ermittelt werden,
**dadurch gekennzeichnet, dass**
- Fahrzeugbetriebsdaten (66) eines Fremdfahrzeugs (12) empfangen werden, und
- abhängig von den Fahrzeugbetriebsdaten (66) des Fremdfahrzeugs (12) die wenigstens eine redundante zweite Anwendung (56) von einem Aktivzustand, in dem das Ermitteln der Fahrzeugführungsdaten (62) unter Berücksichtigung der Ausgangsdaten (60) der wenigstens einen redundanten zweiten Anwendung (56) erfolgt, in einen Bereitschaftszustand wechselt, in dem eine von der wenigstens einen redundanten zweiten Anwendung (56) genutzte Rechnerinstanz (22) einer Rechnereinheit (16) zumindest mit geringerer Häufigkeit als im Aktivzustand ausgeführt wird.

2. Verfahren nach Anspruch 1, **dadurch gekennzeichnet, dass** die Fahrzeugführungsdaten (62) vor dem Wechseln der wenigstens einen redundanten zweiten Anwendung (56) vom Aktivzustand in den Bereitschaftszustand für einen vorgegebenen Zeitraum unabhängig von den Ausgangsdaten (60) der wenigstens einen redundanten zweiten Anwendung (56) ermittelt werden.

3. Verfahren nach einem der vorhergehenden Ansprüche, **dadurch gekennzeichnet, dass** das Wechseln der wenigstens einen redundanten zweiten Anwendung (56) vom Aktivzustand in den Bereitschaftszustand abhängig von einem Vergleich der Ausgangsdaten (60) der wenigstens einen redundanten zweiten Anwendung (56) mit den Fahrzeugbetriebsdaten (66) des Fremdfahrzeugs (12) erfolgt.

4. Verfahren nach einem der vorhergehenden Ansprüche, **dadurch gekennzeichnet, dass** der Bereitschaftszustand einen Passivzustand ohne Nutzung der Rechnerinstanz (22) nutzt.

5. Verfahren nach einem der vorhergehenden Ansprüche, **dadurch gekennzeichnet, dass** die Ausgangsdaten (58) der ersten Anwendung (54) mit den Fahrzeugbetriebsdaten des Fremdfahrzeugs (12) verglichen werden.

6. Verfahren nach Anspruch 5, **dadurch gekennzeichnet, dass** abhängig von dem Vergleich die wenigstens eine redundante zweite Anwendung (56) vom Bereitschaftszustand in den Aktivzustand wechselt.

7. Verfahren nach einem der vorhergehenden Ansprüche, **dadurch gekennzeichnet, dass** zum Wechseln zwischen dem Bereitschaftszustand und dem Aktivzustand der wenigstens einen redundanten zweiten Anwendung (56) ein vorgegebener Sicherheitspegel berücksichtigt wird.

8. Verfahren nach einem der vorhergehenden Ansprüche, **dadurch gekennzeichnet, dass** abhängig von einem Vergleich der Ausgangsdaten (58, 60) von wenigstens der ersten oder der wenigstens einen redundanten zweiten Anwendung (54, 56) mit den Fahrzeugbetriebsdaten (66) des Fremdfahrzeugs (12) ein Warnsignal abgegeben wird.

9. Verfahren nach einem der vorhergehenden Ansprüche, **dadurch gekennzeichnet, dass** ein aktueller Fahrzustand des Kraftfahrzeugs (10) ermittelt wird und die wenigstens eine redundante zweite Anwendung (56) ergänzend abhängig vom aktuellen Fahrzustand im Aktivzustand oder dem Bereitschaftszustand betrieben wird.

10. Verfahren nach einem der vorhergehenden Ansprüche, **dadurch gekennzeichnet, dass** eine Zuverlässigkeit einer Kommunikationsverbindung (42, 44) zum Fremdfahrzeug (12) ermittelt wird und die wenigstens eine redundante zweite Anwendung (56) ergänzend abhängig von der Zuverlässigkeit im Aktivzustand oder dem Bereitschaftszustand betrieben wird.

11. Verfahren nach einem der vorhergehenden Ansprüche, **dadurch gekennzeichnet, dass** die wenigstens eine redundante zweite Anwendung (56) ergänzend abhängig von einer Priorität in Bezug auf die erste und die wenigstens eine redundante zweite Anwendung (54, 56) im Aktivzustand oder dem Bereitschaftszustand betrieben wird.

12. Verfahren nach einem der vorhergehenden Ansprüche, **dadurch gekennzeichnet, dass** die wenigstens eine redundante zweite Anwendung (56) ergänzend abhängig von einem Kolonnenbetrieb (44, 46) im Bereitschaftszustand betrieben wird.

13. Rechnerprogrammprodukt umfassend ein Programm für eine Rechnereinheit (16) einer Fahrzeugsteuereinrichtung eines Kraftfahrzeugs (10), wobei das Programm Programmkodeabschnitte zum Ausführen eines Verfahrens nach einem der vorhergehenden Ansprüche aufweist, wenn das Programm durch die Rechnereinheit (16) ausgeführt wird.

14. Fahrzeugsteuereinrichtung (20) zum zumindest teilweise automatisierten Führen eines Kraftfahrzeugs (10), wobei die Fahrzeugsteuereinrichtung (20) eine programmgesteuerte Rechnereinheit (16) aufweist, die ausgebildet ist:
- mittels einer ersten Anwendung (54) und wenigstens einer redundanten zweiten Anwendung (56) jeweils Ausgangsdaten (58, 60) abhängig von Kraftfahrzeugbetriebsdaten und/oder Umfelddaten (52) bereitzustellen,
- Fahrzeugführungsdaten (62) zum zumindest teilweise automatisierten Führen des Kraftfahrzeugs (10) abhängig von den Ausgangsdaten (58, 60) zu ermitteln,
**dadurch gekennzeichnet, dass** die Rechnereinheit (16) ferner ausgebildet ist
- Fahrzeugbetriebsdaten (66) eines Fremdfahrzeugs (12) zu empfangen, und
- abhängig von den Fahrzeugbetriebsdaten (66) des Fremdfahrzeugs (12) die wenigstens eine redundante zweite Anwendung (56) von einem Aktivzustand, in dem das Ermitteln der Fahrzeugführungsdaten (62) unter Berücksichtigung der Ausgangsdaten (60) der wenigstens einen redundanten zweiten Anwendung (56) erfolgt, in einen Bereitschaftszustand zu wechseln, in dem eine von der wenigstens einen redundanten zweiten Anwendung (56) genutzte Rechnerinstanz (22) der Rechnereinheit (16) zumindest mit geringerer Häufigkeit als im Aktivzustand ausgeführt wird.

15. Kraftfahrzeug (10) mit einer Fahrzeugsteuereinrichtung (20) zum zumindest teilweise automatisierten Führen des Kraftfahrzeugs (10),
**dadurch gekennzeichnet, dass**
die Fahrzeugsteuereinrichtung (20) nach Anspruch 14 ausgebildet ist.

## Claims

1. Method for guiding a motor vehicle (10) in an at least partially automated manner, wherein
- a first application (54) and at least one redundant second application (56) each provide output data (58, 60) on the basis of motor vehicle operating data and/or environmental data (52),
- vehicle guidance data (62) for guiding the motor vehicle (10) in an at least partially automated manner are determined on the basis of the output data (58, 60),
**characterized in that**
- vehicle operating data (66) relating to a third-party vehicle (12) are received, and
- on the basis of the vehicle operating data (66) relating to the third-party vehicle (12), the at least one redundant second application (56) changes from an active state, in which the vehicle guidance data (62) are determined taking into account the output data (60) from the at least one redundant second application (56), into a standby state, in which a computer instance (22) of a computer unit (16) that is used by the at least one redundant second application (56) is executed at least less frequently than in the active state.

2. Method according to Claim 1, **characterized in that**, before the at least one redundant second application (56) changes from the active state into the standby state, the vehicle guidance data (62) are determined independently of the output data (60) from the at least one redundant second application (56) for a predefined period.

3. Method according to one of the preceding claims, **characterized in that** the at least one redundant second application (56) changes from the active state into the standby state on the basis of a comparison of the output data (60) from the at least one redundant second application (56) with the vehicle operating data (66) relating to the third-party vehicle (12).

4. Method according to one of the preceding claims, **characterized in that** the standby state uses a passive state without using the computer instance (22).

5. Method according to one of the preceding claims, **characterized in that** the output data (58) from the first application (54) are compared with the vehicle operating data relating to the third-party vehicle (12).

6. Method according to Claim 5, **characterized in that** the at least one redundant second application (56) changes from the standby state into the active state on the basis of the comparison.

7. Method according to one of the preceding claims, **characterized in that** a predefined safety level is taken into account for changing between the standby state and the active state of the at least one redundant second application (56).

8. Method according to one of the preceding claims, **characterized in that** a warning signal is output on the basis of a comparison of the output data (58, 60) from at least the first or the at least one redundant second application (54, 56) with the vehicle operating data (66) relating to the third-party vehicle (12).

9. Method according to one of the preceding claims, **characterized in that** a current driving state of the motor vehicle (10) is determined and the at least one redundant second application (56) is additionally operated in the active state or the standby state on the basis of the current driving state.

10. Method according to one of the preceding claims, **characterized in that** a reliability of a communication connection (42, 44) to the third-party vehicle (12) is determined and the at least one redundant second application (56) is additionally operated in the active state or the standby state on the basis of the reliability.

11. Method according to one of the preceding claims, **characterized in that** the at least one redundant second application (56) is additionally operated in the active state or the standby state on the basis of a priority with respect to the first and the at least one redundant second application (54, 56).

12. Method according to one of the preceding claims, **characterized in that** the at least one redundant second application (56) is additionally operated in the standby state on the basis of convoy operation (44, 46).

13. Computer program product comprising a program for a computer unit (16) of a vehicle control device of a motor vehicle (10), wherein the program has program code sections for carrying out a method according to one of the preceding claims when the program is executed by the computer unit (16).

14. Vehicle control device (20) for guiding a motor vehicle (10) in an at least partially automated manner, wherein the vehicle control device (20) has a program-controlled computer unit (16) which is designed:
- to use a first application (54) and at least one redundant second application (56) to respectively provide output data (58, 60) on the basis of the motor vehicle operating data and/or environmental data (52),
- to determine vehicle guidance data (62) for guiding the motor vehicle (10) in an at least partially automated manner on the basis of the output data (58, 60),
**characterized in that** the computer unit (16) is also designed
- to receive vehicle operating data (66) relating to a third-party vehicle (12), and
- on the basis of the vehicle operating data (66) relating to the third-party vehicle (12), to change the at least one redundant second application (56) from an active state, in which the vehicle guidance data (62) are determined taking into account the output data (60) from the at least one redundant second application (56), into a standby state, in which a computer instance (22) of the computer unit (16) that is used by the at least one redundant second application (56) is executed at least less frequently than in the active state.

15. Motor vehicle (10) having a vehicle control device (20) for guiding the motor vehicle (10) in an at least partially automated manner,
**characterized in that**
the vehicle control device (20) is designed according to Claim 14.

## Revendications

1. Procédé de conduite au moins partiellement automatisée d'un véhicule automobile (10), dans lequel
- une première application (54) et au moins une deuxième application redondante (56) fournissent respectivement des données de sortie (58, 60) en fonction de données de fonctionnement de véhicule automobile et/ou des données d'environnement (52),
- des données de conduite de véhicule (62) destinées à la conduite au moins partiellement automatisée du véhicule automobile (10) sont déterminées en fonction des données de sortie (58, 60),
**caractérisé en ce que**
- des données de fonctionnement de véhicule (66) d'un véhicule tiers (12) sont reçues, et
- en fonction des données de fonctionnement de véhicule (66) du véhicule tiers (12), ladite au moins une deuxième application redondante (56) passe d'un état actif dans lequel la détermination des données de conduite de véhicule (62) s'effectue en tenant compte des données de sortie (60) de ladite au moins une deuxième application redondante (56), à un état de veille dans lequel une instance informatique (22) d'une unité informatique (16) utilisée par ladite au moins une deuxième application redondante (56) est exécutée au moins à une fréquence plus faible que dans l'état actif.

2. Procédé selon la revendication 1, **caractérisé en ce que** les données de conduite de véhicule (62) sont déterminées avant le passage de ladite au moins une deuxième application redondante (56) de l'état actif à l'état de veille pendant un intervalle de temps prédéterminé, indépendamment des données de sortie (60) de ladite au moins une deuxième application redondante (56) .

3. Procédé selon l'une quelconque des revendications précédentes, **caractérisé en ce que** le passage de ladite au moins une deuxième application redondante (56) de l'état actif à l'état de veille s'effectue en fonction d'une comparaison des données de sortie (60) de ladite au moins une deuxième application redondante (56) aux données de fonctionnement de véhicule (66) du véhicule tiers (12).

4. Procédé selon l'une quelconque des revendications précédentes, **caractérisé en ce que** l'état de veille utilise un état passif sans utilisation de l'instance informatique (22).

5. Procédé selon l'une quelconque des revendications précédentes, **caractérisé en ce que** les données de sortie (58) de la première application (54) sont comparées aux données de fonctionnement de véhicule du véhicule tiers (12).

6. Procédé selon la revendication 5, **caractérisé en ce que** ladite au moins une deuxième application redondante (56) passe de l'état de veille à l'état actif en fonction de la comparaison.

7. Procédé selon l'une quelconque des revendications précédentes, **caractérisé en ce qu'**un niveau de sécurité prédéterminé est pris en compte pour le passage de l'état de veille à l'état actif de ladite au moins une deuxième application redondante (56).

8. Procédé selon l'une quelconque des revendications précédentes, **caractérisé en ce qu'**un signal d'avertissement est émis en fonction d'une comparaison des données de sortie (58, 60) d'au moins la première ou de ladite au moins une deuxième application redondante (54, 56) aux données de fonctionnement de véhicule (66) du véhicule tiers (12).

9. Procédé selon l'une quelconque des revendications précédentes, **caractérisé en ce qu'**un état de conduite actuel du véhicule automobile (10) est déterminé et **en ce que** ladite au moins une deuxième application redondante (56) est exploitée de manière complémentaire dans l'état actif ou dans l'état de veille en fonction de l'état de conduite actuel.

10. Procédé selon l'une quelconque des revendications précédentes, **caractérisé en ce qu'**une fiabilité d'une liaison de communication (42, 44) avec le véhicule tiers (12) est déterminée et **en ce que** ladite au moins une deuxième application redondante (56) est exploitée de manière complémentaire dans l'état actif ou dans l'état de veille en fonction de la fiabilité.

11. Procédé selon l'une quelconque des revendications précédentes, **caractérisé en ce que** ladite au moins une deuxième application redondante (56) est exploitée de manière complémentaire dans l'état actif ou dans l'état de veille en fonction d'une priorité par rapport à la première et à ladite au moins une deuxième application redondante (54, 56).

12. Procédé selon l'une quelconque des revendications précédentes, **caractérisé en ce que** ladite au moins une deuxième application redondante (56) est exploitée de manière complémentaire dans l'état de veille en fonction d'un fonctionnement en colonne (44, 46).

13. Produit de programme informatique comprenant un programme destiné à une unité informatique (16) d'un dispositif de commande de véhicule d'un véhicule automobile (10), dans lequel le programme comprend des parties de code de programme destinées à mettre en œuvre un procédé selon l'une quelconque des revendications précédentes lorsque le programme est exécuté par l'unité informatique (16).

14. Dispositif de commande de véhicule (20) pour conduite au moins partiellement automatisée d'un véhicule automobile (10), dans lequel le dispositif de commande de véhicule (20) comporte une unité informatique (16) commandée par programme, qui est conçue pour :
- fournir respectivement, au moyen d'une première application (54) et d'au moins une deuxième application redondante (56), des données de sortie (58, 60) en fonction de données de fonctionnement de véhicule automobile et/ou des données d'environnement (52),
- déterminer des données de conduite de véhicule (62) destinées à la conduite au moins partiellement automatisée du véhicule automobile (10) en fonction des données de sortie (58, 60),
**caractérisé en ce que** l'unité de calcul (16) est en outre conçue pour
- recevoir des données de fonctionnement de véhicule (66) d'un véhicule tiers (12), et
- en fonction des données de fonctionnement de véhicule (66) du véhicule tiers (12), faire passer ladite au moins une deuxième application redondante (56) d'un état actif dans lequel la détermination des données de conduite de véhicule (62) s'effectue en tenant compte des données de sortie (60) de ladite au moins une deuxième application redondante (56), à un état de veille dans lequel une instance informatique (22) de l'unité informatique (16) utilisée par ladite au moins une deuxième application redondante (56) est exécutée au moins avec une fréquence plus faible que dans l'état actif.

15. Véhicule automobile (10) comprenant un dispositif de commande de véhicule (20) destiné à la conduite au moins partiellement automatisée du véhicule automobile (10),
**caractérisé en ce que**
le dispositif de commande de véhicule (20) est réalisé selon la revendication 14.
